# EUROPEAN PATENT SPECIFICATION

(11) **EP 4 456 998 B1**
(45) Date of publication and mention of the grant of the patent: **14.01.2026**
(21) Application number: 22862361.7
(22) Date of filing: 29.12.2022
(51) Int. Cl.: B01D 33/048, B01D 33/333, B01D 33/46, B01D 33/76, B65G 45/16

(54) **DEVICE FOR FILTERING A LIQUID**
VORRICHTUNG ZUM FILTRIEREN EINER FLÜSSIGKEIT
DISPOSITIF DE FILTRATION D'UN LIQUIDE

(30) Priority: 30.12.2021 IT 202100033068
(43) Date of publication of application: 06.11.2024
(73) Proprietor: Siderurgica del Polesine S.r.l., 45100 Rovigo (IT)
(72) Inventor: PETAZZONI, Paolo, 44123 Ferrara (IT)
(74) Representative: Pelanda, Paolo
(86) International application number: PCT/IB2022/062900
(87) International publication number: WO 2023/126884

(56) References cited:
- US-A- 1 875 442
- US-A- 3 999 649
- US-A- 4 402 394
- US-A1- 2007 241 039
- US-A1- 2014 374 337
- US-A1- 2016 376 108

## Description

### Field of application of the invention

The present invention concerns the technical field of the treatment and purification of liquids, in particular water, and the subject of the invention is a device for filtering a liquid.

### State of the art

As is known, devices capable of separating a liquid from the particles and/or solid materials dispersed within it are used in the liquid and water treatment sector.

More specifically, these devices are configured to be installed inside a channel or duct in which the liquid to be filtered circulates and are constituted by a supporting frame suited to support a perforated filtering belt capable of allowing the liquid to flow through and the solid parts present therein to be retained.

The filtering belts used in this type of devices make it possible to separate relatively medium to large-sized solids such as, for example, leaves, branches, particulate matter of various kinds, plastic, waste etc.

During the operation of the device, only part of the filtering belt is immersed in the liquid, and driving means are provided to promote the rotation of the belt along a closed loop.

In this way, it is possible to promote the constant replacement of the portion of the belt that is intended to come into contact with the liquid.

In this way, the accumulation of solids on the outer surface of the belt is avoided; these solids are retained and accumulated as the liquid flows through the holes made in the meshes of the belt.

The movement of the belt along a closed course (quite similar to the course followed by the outer surface of a conveyor belt) makes it possible to constantly renew the outer surface of the belt that comes into contact with the liquid to be filtered, in such a way that the filtering power of the device is maintained high during its operation.

In addition to the above, the movement of the belt drives the solid materials resting on its outer surface (due to the fact that the same portion of the belt previously came into contact with the liquid) towards a remote area where a belt cleaning phase can be carried out before the belt is again immersed into the liquid.

The filtering devices are equipped with scraper means designed to come into contact with the outer surface of the liquid in such a way as to promote the detachment of the solid materials that accumulate on it following a filtration cycle.

In general, the scraper means comprise a cylindrical brush fitted with semi-rigid bristles; this brush is set rotating around its own axis (by a motor-driven kinematic mechanism) so as to scrape the outer surface of the conveyor belt, promoting the detachment of the solid materials adhering to it.

The action of the scraper brush (or, more generally, of the scraper means) must, however, be well balanced, as a complete cleaning of the belt can be obtained only if the pressure exerted by the brush on its outer surface is included within a predetermined range of values.

Too light or, on the contrary, too heavy pressure exerted by the brush on the belt can actually affect the belt cleaning cycle, as it does not allow the removal of all the solid materials adhering to the outer surface of the belt itself.

In order to achieve the correct setting of the pressure exerted by the brush on the belt, many mechanisms have been developed which are associated with a filtering device and configured to adjust the distance of the belt from the brush, so as to indirectly vary the pressure exerted by the latter on the filtering meshes.

Document EP2859929 describes a filtering device configured as a belt and suitable for the mechanical purification of a liquid, which is provided with a continuous filtering belt made up of flat filtering elements that can be oriented with respect to each other and connected to each other, and with a flexible control means that is guided on a lower transmission device and on at least one upper transmission device. There is also a frame that carries the transmission devices and the filtering belt, wherein a rotatable scraping device is arranged in proximity to the upper transmission device, said scraping device being positioned on a revolving arm, resting on the frame where the scraping device is supported against its own weight force by means of a supporting device. This supporting device, together with the upper transmission device, is arranged on a common support that can be displaced with respect to the frame.

The main drawback related to the solution described above lies in that the process for making the filtering device is very complex.

The mechanism that adjusts the position of the scraper brush with respect to the end of the belt (also referred to as *transmission* in technical jargon), in fact, is made up of a large number of parts, the manufacture of which requires relatively complex processing cycles both on the individual components and on the supporting frame.

Moreover, this solution is rather expensive, and its implementation has an all but negligible impact on the total cost of the filtering device.

A further drawback of this solution lies in that the high complexity of the above mentioned solution, which required a high degree of precision during the assembly of the device, prolonging its production time.

Another, yet not the least drawback of the previously described filtering device lies in the increased maintenance required for the correct operation of the system that moves the scraper brush.

In fact, it is well known that the maintenance operations on a filtering device installed outdoors and placed in contact with a predetermined quantity of liquid are not easy to carry out and, in addition to long downtime, also require the presence of particularly experienced operators.
Documents US 3,999,649, US 1,875,442 and US 2016/0376108 describe devices for filtering liquids equipped with scraper elements for the filtering belt. The configuration of the scraper elements described in relation to these devices, however, does not allow the upper surface of the filtering belt to be effectively cleaned of the foreign matter adhering to it; moreover, even the solutions proposed in these documents are affected by the above mentioned drawbacks.

### Presentation of the invention

The present invention intends to overcome the above-mentioned technical drawbacks by providing a particularly efficient and high-performance device for filtering liquids.

More specifically, the main object of the present invention is to provide a device for filtering a liquid that allows the filtering belt to be cleaned of solid particles in a particularly efficient manner.

A further object of the present invention is to provide a device for filtering a liquid that is relatively simple to manufacture, especially when compared with the devices currently present on the market.

Another object of the present invention is to provide a device for filtering a liquid that is particularly reliable and requires limited maintenance during its life cycle.

A further object of the present invention is to provide a device for filtering a liquid that comprises a limited number of components.

Another object of the present invention is to provide a device for filtering a liquid whose assembly and installation on site are particularly simple and do not require the presence of highly skilled personnel.

Again, another yet not the least object of the present invention is to provide a device for filtering a liquid that has significantly reduced production costs compared to the similar filtering devices currently present on the market.

These objects, together with others which are better clarified below, are achieved by a device for filtering a liquid of the type according to claim 1.

Other objects that are better described below are achieved by a device for filtering a liquid according to the dependent claims.

### Brief description of the drawings

The advantages and characteristics of the present invention will become clear from the following detailed description of some preferred but not limiting configurations of a device for filtering a liquid, referring in particular to the following drawings:
- **Figure 1** shows a perspective view of a device for filtering a liquid according to the invention;
- **Figure 2** shows a front view of the device of Figure 1;
- **Figure 3A** and **Figure 3B** respectively show a right side view and a left side view of the device of Figure 1;
- **Figure 4** shows a sectional view of the device of Figure 1;
- **Figure 5** shows an enlargement of a detail of Figure 4.

### Detailed description of the invention

The present invention relates to a device for filtering a liquid. This device, here below indicated by the reference number 1, can be mainly used to separate the solid bodies or particles dispersed in a liquid or sewage.

More specifically, the device 1 that is the subject of the present invention is configured to be installed in proximity to an open duct or a channel in which the liquid to be filtered circulates.

As is better clarified later on in the present description, the device 1 must be inserted in the channel or duct through which the liquid to be filtered flows.

More specifically, the device 1 must be partially immersed in the liquid to be filtered, which must flow in the channel at a predetermined speed and/or flow rate, so as to completely hit the portion of the device **1** with which said liquid comes into contact.

The liquid flows through the immersed part of the device **1** without being held back; while the liquid flows, the solids present therein are held back by the device itself, so that the liquid downstream of the device is filtered and free of dispersed solids.

The liquid downstream of the device **1** has therefore undergone a filtration process while the liquid upstream of said device **1** hasn't; this filtration is carried out by the device **1** itself by means of the portion immersed in the liquid to promote its filtration.

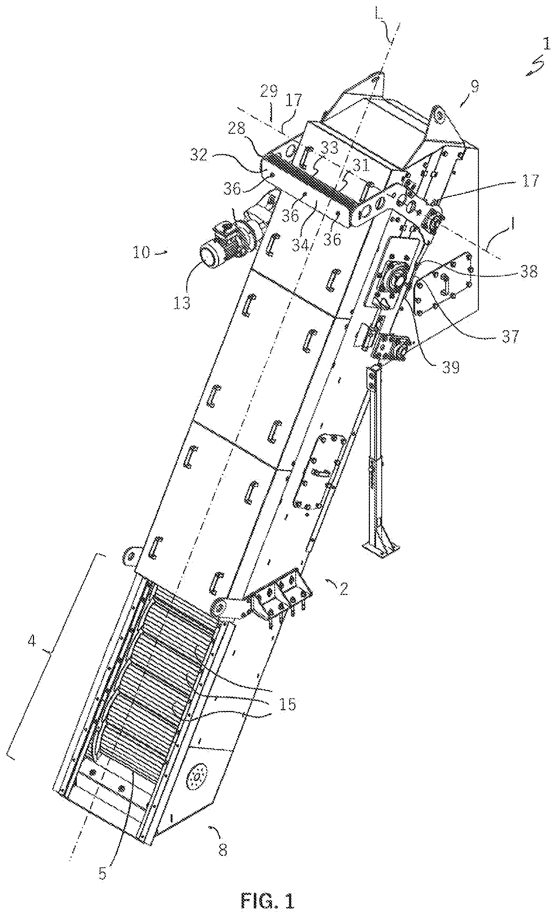

**Figures 1** to **5** show only a device for filtering liquids, while said Figures show neither the liquid to be filtered nor the channel in which said liquid circulates (as the channel and the liquid to be filtered are known per se and do not need further explanations).

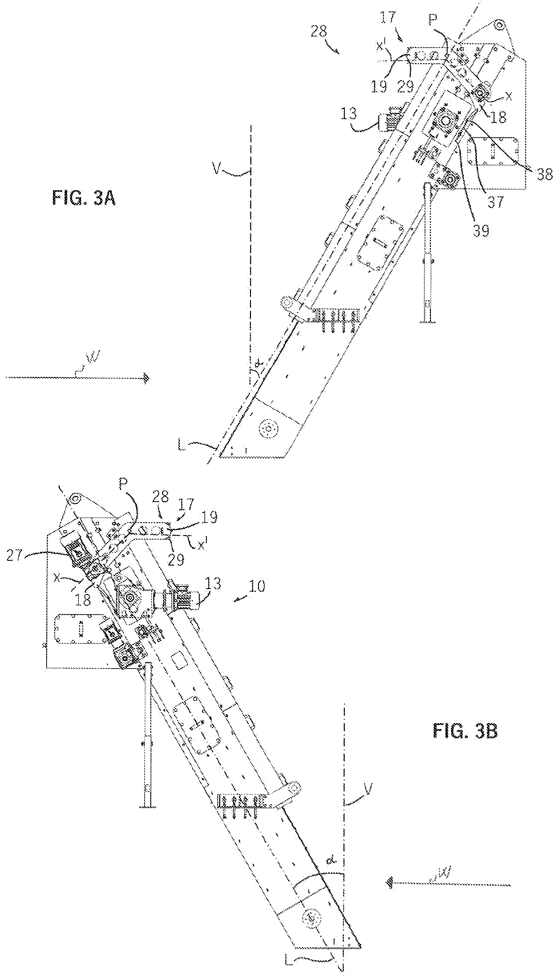

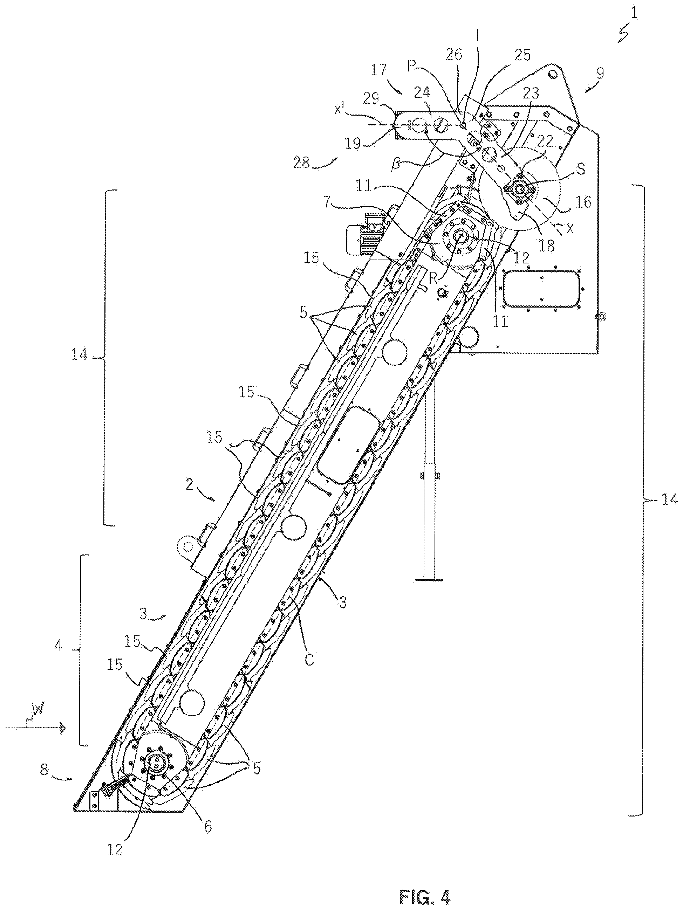

However, as schematically shown in **Figure 3A, Figure 3B** and **Figure 4****,** the liquid flows in the channel along the direction indicated by the arrow **W.**

As better illustrated in **Figures** from **1** to **3B,** the device **1** comprises a supporting frame **2** that extends along a longitudinal extension direction **L.**

More specifically, the supporting frame **2** can define a supporting structure inclined with respect to a vertical reference direction **V** at a predetermined angle of inclination **α.**

Said angle of inclination **α** can generally be included between 10° and 30° but it can also have different values with respect to the indicated range.

All the components of the device **1** are supported by the frame **2** and therefore they also follow the inclination of the latter with respect to the vertical reference direction **V.**

The inclination of the frame **2** with respect to the vertical **V** makes it possible to increase the filtering surface provided to the liquid; in other words, during its flow inside the channel, the entire volume of liquid is forced to pass through a filtering portion of the device whose overall extension, precisely because of the inclination, is greater than the extension it would find if the frame **2** were substantially vertical.

There is also a continuous filtering belt **3** anchored to the supporting frame **2** and having a portion **4** inserted (that is, immersed) in the liquid in such a way as to promote its filtration.

As is clearly illustrated in the sectional view of **Figure 4****,** the belt **3** is constituted by a plurality of filtering elements **5** having predetermined dimensions and arranged side-by-side with respect to the longitudinal extension direction **L.**

These filtering elements **5** are arranged side by side so that they are substantially in contact with one another so as to seamlessly cover the entire extension of the belt **3;** this arrangement makes it possible to cover the entire extension of the belt **3** with the filtering elements **5,** so that the liquid does not find empty areas while flowing through the device **1.**

Analogously to the conveyor belts used in other industrial sectors, the filtering elements **5** are connected in such a way as to define a closed-loop course **C** mainly arranged along a longitudinal direction (substantially parallel to the longitudinal extension direction L of the frame **2)** and provided with two respective ends.

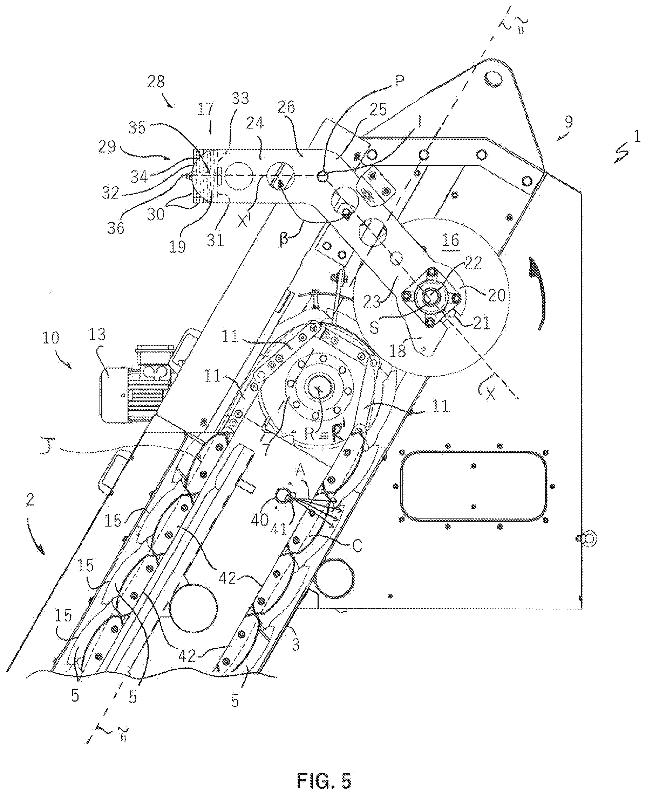

More specifically, the closed course C is defined by a pair of substantially parallel and longitudinal straight sections that are joined at convenient curved ends, in particular said curved ends are constituted by respective semicircles whose centre is a point **R').** One of said centres **R'** is visible in **Figure 5****.**

These ends are called transmissions because they define the curved areas through which the filtering elements **5** must travel at the end of a straight and longitudinal section.

In **Figure 4****,** the lower transmission is indicated by the reference number **6,** while the upper transmission is indicated by the reference number **7.**

As clearly visible in the Figures, the lower transmission **6** of the belt **3** is intended to be immersed in the liquid and substantially defines the lower end **8** of the frame **2.**

The upper transmission **7** of the belt **3** projects from the liquid and substantially defines the upper end **9** of the frame **2.**

Handling means **10** are also provided, which are suited to promote the controlled movement of the belt **3** along a handling direction that is substantially parallel to the longitudinal extension direction **L** of the frame **2.**

The handling means **10** can comprise two chains **11** extending along the closed course **C** of the belt **3** to which the plurality of filtering elements **5** is connected.

These chains **11** are partially visible in **Figure 4** and **Figure 5** and are operatively associated with a pair of rollers and/or gear wheels **12** (also belonging to the handling means **10)** arranged at the transmissions **6, 7** of the belt **3.**

There is also a gearmotor **13** associated with one of the rollers **12** to promote its controlled rotation around its extension axis **R** (the extension axis **R** substantially extends at the centre **R'** of the semicircles defining the curved sections of the closed course **C).**

In the configuration of the device illustrated in the Figures, the gearmotor **13** is operatively connected to the roller **12** located at the upper transmission **7** of the belt **3.**

The assembly of the gearmotor **13** at the upper transmission **7** makes it possible to maintain the gearmotor itself at a safety distance with respect to the liquid flowing in the channel.

The operation of the gearmotor **13** promotes the movement of the belt **3** along the closed-loop course **C;** in this way, it is possible to periodically change the filtering elements **5** that are in contact with the liquid and on which the solids present in the liquid accumulate.

The rotation of the belt **3** along the closed course **C** makes it possible to cyclically alternate the filtering elements **5** that are in contact with the liquid.

The rotation of the belt **3** along a closed loop **C** makes it possible to define two distinct portions of the belt: an active portion **4** represented by the area of the belt **3** that is first hit by the liquid flowing in the channel, and an inactive portion **14** constituted by the remaining part of the belt.

The inactive portion **14** does not contribute in any way to the filtration of the liquid and is represented by the area of the belt **3** that is above and below the active portion (that is, the entire extension of the belt except for the active portion **4).**

During the movement of the belt along the closed course **C,** all the filtering elements, at different moments, contribute to the formation of the active portion **4** and the inactive portion **14.**

Furthermore, during the rotation of the belt **3** along the closed course **C,** the filtering elements that define the active portion **4** advance towards the inactive portion **14,** and vice versa.

Each filtering element **5** is provided with a plurality of through holes having a predetermined diameter; these holes are not visible in the Figures.

The liquid can flow through the respective filtering element **5** by passing through said holes; all the solids whose size exceeds that of the holes, instead, are deposited on the outer surface **15** of said elements so that they are held back by the belt **3** and removed from the liquid.

Also the filtering belt **3** is inclined with respect to the vertical reference direction **V** at the same inclination angle **α** as that of the frame **2;** thanks to this inclination, it is possible to hold the solids back on the respective filtering element **5,** preventing them from falling towards the bottom of the channel.

More specifically, the solids settle on the outer surface **15** of the filtering elements **5** that make up the belt **3.**

The handling means **10** are suited to promote the rotation of the filtering belt **3** along the closed ring C in a clockwise rotation direction (indicated by the arrow positioned in proximity to the upper transmission **7** in **Figure 5****).**

In this way, the solid material deposited on the outer surface **15** of the filtering elements 5 that, at that moment, make up the active portion **4** of the belt **3** is progressively moved upwards (that is, raised), until it reaches the upper transmission **7.**

The handling means **10** can be configured to make the belt 3 move either continuously or discretely (that is, substantially jerkily).

The device **1** furthermore comprises scraper means **16** suited to promote the removal of the solid material deposited on the outer surface **15** of the filtering elements **5** of the belt **3** following their interaction with the liquid to be filtered.

As better illustrated in **Figure 4** and **Figure 5****,** the scraper means **16** can be made up of a cylindrical brush arranged in proximity to the upper transmission **7** of the belt **3** and suited to come into contact with the outer surface **15** of the filtering elements **5.**

Throughout the present description, the term *brush* and the expression *scraper means* are used as synonyms and indicated by the same reference number in the Figures; however, any other equivalent component suited to promote the removal (or detachment) of the solid material deposited on the outer surface of the filtering elements can be used instead of the brush to define the scraper means.

More specifically, the width of the brush **16** can be not shorter than the width of the belt **3,** so that it interacts with the entire extension of the outer surface **15** of the filtering elements **5.**

This brush **16** can be made using a roller of yielding or semi-rigid material or it can be provided with a plurality of radial bristles whose ends are intended to come into contact with the outer surface **15** of the filtering elements **5.**

Conveniently, the device 1 can comprise at least one connection arm **17** suited to support the scraper means **16.**

Moreover, the connection arm **17** is hinged to the frame **2** in an area above that in which the filtering belt **3** is anchored.

In the configuration of the device that is illustrated in the Figures, there is a pair of connection arms **17,** each of which is hinged to the frame **2** above the filtering belt **3.**

The connection arms **17** forming this pair have substantially the same shape in plan view, as can be clearly seen in **Figure 3A** and **Figure 3B** showing the right side view and the left side view of the device 1 that is the subject of the invention.

Each connection arm **17** can have a pair of ends: one end **18** can be facing the filtering belt **3** and thus be in a position near to the upper transmission **7,** while the other end **19** is opposite the end **18** facing the filtering belt **3,** in a position away from the upper transmission **7.**

More specifically, as can be better seen in the Figures, one end **18** of the connection arm **17** is facing towards the upper transmission **7** of the filtering belt while the other end **19** of the arm is facing towards the portion of the belt **3** that defines the upper longitudinal straight section of the closed course **C.** In this context, the upper longitudinal straight section of the course **C** is represented by the rectilinear portion that is first hit by the motion of the liquid (the latter, as described above, circulates in the channel along the direction **W).** The upper longitudinal portion of the course is indicated by the letter **J** in **Figure 4****.**

The arm **17** can be hinged to the frame **2** at a hinge point **P** located between these two ends **18, 19.**

As better illustrated in **Figure 4** and in **Figure 5****,** the brush **16** that defines the scraper means can be anchored in proximity to the end **18** of the arm **17** facing towards the upper transmission **7** of the filtering belt **3.**

More specifically, the brush **16** can be connected to both ends **18** of the pair of arms 17 facing towards the filtering belt **3;** in this case, this pair of arms can define a fork within which the brush **16** is contained.

Each arm **17** of the pair can have a widened portion **20** at the end **18** facing towards the filtering belt **3;** said widened portion **20** can be provided with a slit **21** suited to allow the insertion of the central shaft **22** on which the brush **16** is mounted.

Preferably, each connection arm **17** of the pair can be made up of two substantially straight semi-arms **23, 24** joined at a respective end **25, 26.**

Each semi-arm **23, 24** can extend along respective extension directions **X, X';** these extension directions are oriented in such a way that together they form a predetermined inclination angle **β.**

This configuration of the connection arm **17** is clearly visible in **Figures** from **3A** to **5.**

More specifically, the inclination angle **β** defined by the extension directions X, X' of the semi-arms **23, 24** can be included between 120° and 160°, and preferably close to 130°.

Conveniently, the inclination angle **β** can be selected in such a way as to maintain the end **18** of each arm **17** in a position close to the belt **3** and to promote substantially uniform contact of the scraper means **16** with the belt **3** itself while at the same time applying a pressure suited to allow the detachment of the solid material deposited on the outer surface **15** of the filtering elements **5.**

Conveniently, in an alternative configuration of the invention not illustrated in the Figures, the connection arms **17** can be constituted by a single element having a curvilinear shape.

The semi-arms **23, 24** can furthermore comprise free ends suited to respectively define the ends **18, 19** of the connection arm **17.**

The hinge point **P** can be located in the connection area of the two semi-arms **23, 24,** that is, in proximity to their mutually joined ends **25.**

Conveniently, an additional gearmotor **27** anchored to the frame **2** or to one of the connection arms **17** can be provided in proximity to the end **18** intended to support the brush **16.**

This gearmotor **27** can be operatively connected to the central shaft **22** of the brush **16** so as to promote its controlled rotation around its extension axis **S.**

More specifically, the rotation direction of the brush **16** can be selected so that it is contrary (that is, opposite) to the rotation direction of the filtering belt **3.**

As already described above, the belt **3** rotates clockwise, and therefore the gearmotor **27** is configured to promote the anticlockwise rotation of the brush **16** (indicated by the arrow located near the brush **16** in **Figure 5****).**

Opposite rotation directions respectively associated with the belt **3** and the brush **16** make it possible to improve the interaction of the latter with the outer surface **15** of the filtering elements **5.**

More specifically, the impact of the brush **16** (or of the elements that make it up) against the outer surface **15** of the filtering elements **5** occurs at a speed that is proportional to the difference between the rotation speeds associated with these components.

Thanks to this configuration, it is possible to promote the detachment of all the solids adhering to the outer surface **15** of the filtering elements **5** following their passage through the active portion **4** of the belt **3.**

The device also comprises preloading means **28** associated with at least one connection arm **17.**

The function of the preloading means **28** is to at least partially counteract the weight force exerted on the scraper means **16.**

In this way it is possible to adjust the preload of the latter with respect to the outer surface **15** of the filtering elements **5** that make up the belt **3.**

In the following description, the term *preload* refers to the force that can be transferred by the scraper means **16** to the outer surface **15** of the filtering elements **5** to promote the detachment of the solid material adhering to said surface.

In this context, therefore, it is possible to associate the term *preload* also with the pressure applied by the scraper means to the outer surface **15** of the filtering means **5** to transfer on them the force required to promote the detachment of the solid material adhering to said surface.

Therefore, by varying the preload it is possible to modify the interaction promoted by the scraper means **16** on the outer surface of the filtering elements **5.**

By acting on the preload, in fact, it is possible to obtain a different action of the scraper means **16** on the belt **3,** actually varying the ability of the brush **16** to remove the solids distributed on the outer surface **15** of the filtering elements **5.**

According to a specific characteristic of the invention, the preloading means **28** comprise one or more counterweights **29.**

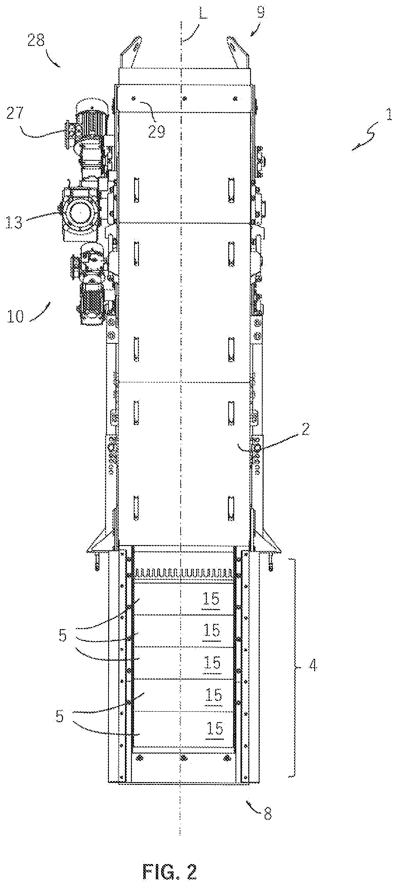

As can be clearly seen in the device illustrated in **Figure 1** and in **Figure 2****,** a single counterweight **29** can be provided, anchored to both connection arms **17** at the end **19,** opposite the end **18** to which the brush **16** is anchored.

The way in which the scraper means **16** and the counterweight (or counterweights) **29** are anchored to the connection arm (or connection arms) **17** is not accidental.

More specifically, the configuration of the connection arm **17** with two semi-arms **23, 24** extending along directions inclined by a predetermined angle **β** makes it possible to anchor the scraper means **16** and the counterweight **29** as described below:
- the scraper means **16** are anchored at the end **19** of the connection arm **17** in such a way that they face towards the filtering elements **5** of the belt **3** that define the upper transmission **7;**
- the counterweight **29** is anchored at the end **19** of the arm facing towards the filtering elements **5** of the belt **3** that define the upper longitudinal straight section **J** of the closed course **C.**

The special configuration of the connection arms **17** and the anchorage of the scraper means **16** and the counterweight (or counterweights) **29** at the ends **18, 19** of the latter allow the following characteristics to be defined:
- the scraper means **16** and the counterweight **29** are arranged on the opposite side with respect to the extension of the filtering belt 3, that is, said elements are arranged on the opposite side with respect to a longitudinal centreline plane π passing through the centres **R'** of the curved sections of the closed course C (the plane π is schematically shown in **Figure 5****);**
- the height of the counterweight **29** above the ground exceeds the height of the scraper means **29** above the ground, and this is why the counterweight **29** is placed above the scraper means **16** (as better illustrated in **Figure 5****).**

In this way, the position of the scraper means **16** and of the counterweight **29** described above makes it possible to provide a device **1** that benefits from some important advantages:
- the scraper means **16** interact with the belt **3** in proximity to the upper transmission **7,** that is, at the upper surface **15** of the filtering elements **5** defining one of the curved sections of the course **C.** When the filtering elements **5** are distributed along a curved section, in fact, the scraper means **16** (or the brush) can easily interact with the entire extension of the outer surface **15** of each filtering element **5,** in such a way as to maximize the action intended to detach the solids adhering thereto;
- the position of the counterweight (or counterweights) **29** above the filtering elements **5** that define the upper straight section **J** of the course **C** makes access to this component particularly easy for an operator who intends to carry out maintenance operations on the counterweight **29** (for example, to replace the counterweight or integrate new elements in it);
- the position of the counterweight (or counterweights) **29** above the scraper means **16** and above the straight section **J** of the closed course **C** makes it possible to keep the counterweight **29** clean over time as the latter is not hit by the solids that fall from the belt **3** or that are ejected downwards following their removal from the upper surface **15** of the filtering elements **5** due to the action of the scraper means **16.**

The pair of connection arms **17** forms a unit assembly with the scraper means **16** and the counterweight **29.**

This unit assembly is hinged to the frame **2** at two hinge points **P** (each associated with the respective arm **17)** lying on the same hinge axis.

The hinge axis is indicated by the reference letter I in the Figures.

In this way, the unit assembly substantially behaves as a lever hinged at the hinge axis **I:** the brush **16** is anchored to one end **18** of this lever, while the counterweight **29** is anchored to the other end **19.**

By varying the weight associated with the counterweight **29,** it is possible to promote the rotation of the unit assembly (defining the lever) around the hinge axis **I**, thus obtaining the upward or downward movement of the brush **16,** that is, its lifting or lowering movement.

The lowering of the brush **16** corresponds to its movement towards the belt **3** and the upper transmission **7.**

On the contrary, the lifting of the brush **16** corresponds to its movement away from the belt 3 and the upper transmission **7.**

The presence of a counterweight **29** defines a balanced position for the brush **16.**

As a result of the balancing of the weights applied, respectively, by the counterweight **29** and the brush **16,** the connection arm **17** (which in this configuration behaves like a lever) is in a stable balance condition.

Each value of the counterweight **29** thus corresponds to a specific balance position of the brush **16** and each balance position identifies a given distance (which remains substantially constant during the operation of the device **1** and the rotation of the belt **3)** between the brush and the upper transmission **7.**

According to an alternative configuration of the invention, not illustrated in the Figures, the counterweight **29** and the scraper means **16** can be anchored to a single connection arm **17** hinged to the frame **2** at a respective hinge point **P.**

What has been described with reference to the solution comprising the pair of connection arms **17** also applies to a solution comprising a single arm **17.**

Furthermore, according to the invention, considering both the single-arm and the multiple-arm solution, a plurality of counterweights **29** can be used, anchored not only to the end **19** of said arm/arms but also to the inner area along the extension directions **X, X'** of the same.

However, also in this configuration all the counterweights **29** are arranged above the filtering elements **5** that define the upper longitudinal straight section **J** of the closed course **C** (and, at the same time, above the scraper means **16).**

Conveniently, each counterweight **29** can be made up of a plurality of mutually superimposed metal plates **30.**

More specifically, each plate **30** can have a reference base weight and the counterweight **29** can be made by superimposing a plurality of plates **30,** each of which has a base weight.

Alternatively, the counterweight **29** can be obtained by superimposing plates **30** having different weights.

These plates **30** are joined together by suitable connection means suited to define a counterweight **29** made using a plate pack.

This configuration of the counterweight **29** is visible in **Figure 1** and **Figure** 5.

In practice, the total weight of the counterweight **29** varies according to the number of metal plates **30** that make up the pack.

Preferably, the connection means comprise one or more holes made in each metal plate **30** in predetermined positions.

More specifically, the position of the holes can be the same for all the plates 30, in such a way as to promote the alignment of said holes once the plates 30 have been superimposed on one another.

The alignment of the holes creates a (through) passage that extends seamlessly between the outer surfaces **31, 32** of the end plates **33, 34** delimiting the pack (that is, the top plate **33** and the bottom plate **34).**

The connection means also comprise a plurality of bolts **35** suited to be inserted in the passages and respective locking nuts **36** suited to be screwed onto said bolts **35** in such a way as to compact the metal plates **30** together to form a corresponding pack having a predetermined weight.

**Figure 1** and **Figure 5** show the bolts **35** inserted in the respective passages (the latter are not shown in said Figures) and the corresponding nuts **36** suited to lock the plates **30** in such a way as to define a counterweight **29** of the "pack" type.

As better illustrated in **Figure 1** and in **Figure 3A****,** the preloading means **28** can comprise one or more springs **37** whose ends **38, 39** are operatively connected to the frame **2** and to the end **18** of the connection arm **17.**

**As** already described above, the connection arm **17** can be tilting (or oscillating) with respect to the frame **2** (around the hinge axis **I**), and the brush **16** can be raised when interacting with large solids adhering to the outer surface **15** of the filtering elements **5.**

The springs **37** have the function to bring the brush **16** back (or return the brush) to its balance position (that is, to the balance position of the connection arm **17,** as described above).

In other words, the springs **37** make it possible to apply a return force directed downwards to the end **18** of the connection arm **17,** said force being suited to promote the lowering of the brush **16** (when it is subjected to impulsive upward movements following the interaction of the solids adhering to the filtering elements **5** of the belt **3)** and its return to the balance position.

As better illustrated in **Figure 5****,** the device can comprise a washing bar **40** located within the closed course **C** that delimits the belt **3.**

The length of this washing bar **40** can be substantially equal to the width of the belt 3, said washing bar **40** being provided with a plurality of nozzles **41** (one of which is visible in **Figure 5****)** suited to direct a jet of liquid **A** (generally water) towards the inner surface **42** of the filtering elements **5.**

The jet of water **A** emitted (or sprayed) by the nozzles **37,** directed from the inside of the belt **3** towards the outside, promotes the washing of the filtering elements **5** and the removal of any solids that the scraper means **16** were not able to remove from the outer surface **15** of the same during their previous operating cycle.

For this reason, the washing bar **40** is located downstream of the brush **16** (with respect to the rotation direction of the latter) in the section of the closed course **C** covered by the filtering elements **5** during their movement from the upper transmission **7** to the lower transmission **6.**

The present invention can be carried out in other variants, all falling within the scope of the inventive features claimed and described herein; said technical features can be replaced by different technically equivalent elements and materials; the shapes and dimensions of the invention can be any as long as they are compatible with its use.

The reference numbers and signs included in the claims and in the description are only intended to make the text clearer to understand and must not be considered as elements limiting the technical interpretation of the objects or processes identified by them.

## Claims

1. A device for filtering a liquid in which solid material is dispersed, comprising:
- a supporting frame **(2)** extending along a longitudinal extension direction (L);
- a continuous filtering belt **(3)** anchored to said supporting frame **(2)** and partially inserted in the liquid to promote the filtration thereof and the separation of the solid material dispersed therein;
- handling means **(10)** suited to promote the controlled movement of said filtering belt **(3)** along a direction of movement substantially parallel to said longitudinal extension direction **(L)** of said frame **(2);**
- scraper means **(16)** suited to promote the removal of the solid material deposited on the outer surface **(15)** of said filtering belt **(3)** following its contact with the liquid to be filtered;
- at least one connection arm **(17)** suited to support said scraper means **(16),** said connection arm **(17)** being hinged to said frame **(2)** at a hinge point **(P)** placed above said filtering belt **(3);**
- preloading means **(28)** associated with said at least one connection arm **(17)** and suited to at least partially counteract the weight force acting on said scraper means **(16),** in such a way as to regulate the preload of the latter with respect to the outer surface **(15)** of said filtering belt **(3);**
**characterized in that** said preloading means **(28)** comprise one or more counterweights **(29);**
and **in that** said scraper means **(16)** and the counterweight **(29)** are arranged on the opposite side with respect to the extension of said filtering belt **(3),** said elements being arranged on the opposite side with respect to a longitudinal centreline plane (**π**) passing through the centres **R'** of a curved sections of a closed course **C;**
and **in that** the height of said counterweight **(29)** above the ground exceeds the height of said scraper means **(16)** above the ground.

2. Device according to claim 1, **characterized in that** each connection arm **(17)** has a pair of ends **(18, 19)** and said one hinge point **(P)** is located between said ends **(18, 19).**

3. Device according to claim 2, **characterized in that** said scraper means **(16)** are anchored in proximity to the end **(18)** of said at least one connection arm **(17)** facing towards said filtering belt **(3).**

4. Device according to claim 2 or 3, **characterized in that** said one or more counterweights **(29)** is/are anchored to said connection arm **(17)** in proximity to the end **(19)** that is on the opposite side with respect to the end **(18)** facing towards said filtering belt **(3).**

5. Device according to one or more of claims from 2 to 4, **characterized in that** each connection arm **(17)** consists of two substantially straight semi-arms **(23, 24)** joined at one respective end **(25, 26),** said semi-arms also having corresponding free ends suited to respectively define the ends **(18, 19)** of the connection arm **(17).**

6. Device according to claim 5, **characterized in that** the respective extension directions **(X, X')** of said semi-arms **(23, 24)** are oriented in such a manner to form a predetermined inclination angle (**β**) therebetween.

7. Device according to claim 6, **characterized in that** said inclination angle (**β**) is included between 120° and 160°.

8. Device according to one or more of the claims from 2 to 7, **characterized in that** it comprises a pair of connection arms **(17).**

9. Device according to claim 8, **characterized in that** the connection arms **(17)** of said pair are substantially equal to each other.

10. Device according to claim 8 or 9, **characterized in that** said scraper means **(16)** are connected in proximity to the respective ends **(18)** of each connection arm **(17)** of said pair that face towards the filtering belt **(3),** said one or more counterweights **(29)** being anchored in proximity to the respective ends **(19)** of each connection arm **(17)** of said pair that are on the opposite side with respect to the end **(18)** facing towards said filtering belt.

11. Device according to one or more of the preceding claims, **characterized in that** each counterweight **(29)** is formed by a plurality of metal plates **(30)** superimposed on one another and mutually joined by connection means to define a pack of plates having a predetermined weight.

12. Device according to claim 11, **characterized in that** the weight of each counterweight **(29)** varies as a function of the number of metal plates **(30)** constituting said pack.

13. Device according to claim 11 or 12, **characterized in that** said connection means comprise one or more holes made in each of said metal plates **(30)** in a predetermined position, said holes being aligned with one another when said plates are superimposed, in such a way as to define respective through passages extending between the outer surfaces **(31, 32)** of the end plates **(33, 34)** delimiting the pack.

14. Device according to claim 13, **characterized in that** said connection means comprise, respectively, a plurality of bolts **(35)** suited to be inserted in said passages and a plurality of locking nuts **(36)** suited to be screwed into said bolts **(35)** so as to compact said metal plates **(30)** and form a corresponding pack having a predetermined weight.

## Patentansprüche

1. Vorrichtung zum Filtern einer Flüssigkeit, in der Festmaterial dispergiert ist, umfassend:
- einen Tragrahmen **(2),** der sich entlang einer Längserstreckungsrichtung **(L)** erstreckt;
- ein kontinuierliches Filterband **(3),** das am besagten Tragrahmen **(2)** verankert und teilweise in die Flüssigkeit eingesetzt ist, um dessen Filtration und die Abscheidung des darin dispergierten Festmaterials zu fördern;
- Handhabungsmittel **(10),** die dazu geeignet sind, die kontrollierte Bewegung des besagten Filterbandes **(3)** entlang einer Bewegungsrichtung im Wesentlichen parallel zur besagten Längserstreckungsrichtung **(L)** des besagten Rahmens **(2)** zu fördern;
- Abstreifmittel **(16),** die dazu geeignet sind, die Entfernung des auf der Außenfläche **(15)** des besagten Filterbandes **(3)** abgelagerten Festmaterials nach seinem Kontakt mit der zu filternden Flüssigkeit zu fördern;
- mindestens einen Verbindungsarm **(17),** der dazu geeignet ist, die besagten Abstreifmittel **(16)** zu tragen, wobei der besagte Verbindungsarm **(17)** an einem Scharnierpunkt **(P),** der sich über dem besagten Filterband **(3)** befindet, am besagten Rahmen **(2)** angelenkt ist;
- Vorspannmittel **(28),** die dem besagten mindestens einen Verbindungsarm **(17)** zugeordnet und dazu geeignet sind, der auf die besagten Abstreifmittel **(16)** wirkenden Gewichtskraft zumindest so teilweise entgegenzuwirken, dass die Vorspannung dieser in Bezug auf die Außenfläche **(15)** des besagten Filterbandes **(3)** reguliert wird;
**dadurch gekennzeichnet, dass** die besagten Vorspannmittel **(28)** ein Gegengewicht oder mehrere Gegengewichte **(29)** umfassen;
und dass die besagten Abstreifmittel **(16)** und das Gegengewicht **(29)** auf der gegenüberliegenden Seite in Bezug auf die Erstreckung des besagten Filterbandes **(3)** angeordnet sind, wobei die besagten Elemente auf der gegenüberliegenden Seite in Bezug auf eine Längsmittellinienebene (**π**), die durch die Mittelpunkte **(R')** der gekrümmten Abschnitte eines geschlossenen Weges **(C)** verläuft, angeordnet sind;
und dass die Höhe des besagten Gegengewichts **(29)** über dem Boden die Höhe der besagten Abstreifmittel **(16)** über dem Boden übersteigt.

2. Vorrichtung nach Patentanspruch 1, **dadurch gekennzeichnet, dass** jeder Verbindungsarm **(17)** ein Paar Enden **(18, 19)** aufweist und der besagte eine Scharnierpunkt **(P)** zwischen den besagten Enden **(18, 19)** liegt.

3. Vorrichtung nach Patentanspruch 2, **dadurch gekennzeichnet, dass** die besagten Abstreifmittel **(16)** in der Nähe des Endes **(18)** des besagten mindestens einen Verbindungsarms **(17),** das dem besagten Filterband **(3)** zugewandt ist, verankert sind.

4. Vorrichtung nach Patentanspruch 2 oder 3, **dadurch gekennzeichnet, dass** das besagte eine Gegengewicht oder die besagten mehreren Gegengewichte **(29)** am besagten Verbindungsarm **(17)** in der Nähe des Endes **(19)** verankert ist/sind, das sich auf der gegenüberliegenden Seite in Bezug auf das Ende **(18),** das dem besagten Filterband **(3)** zugewandt ist, befindet.

5. Vorrichtung nach einem oder mehreren der Patentansprüche 2 bis 4, **dadurch gekennzeichnet, dass** jeder Verbindungsarm **(17)** aus zwei im Wesentlichen geraden Halbarmen **(23, 24)** besteht, die an einem jeweiligen Ende **(25, 26)** verbunden sind, wobei die besagten Halbarme auch entsprechende freie Enden aufweisen, die dazu geeignet sind, jeweils die Enden **(18, 19)** des Verbindungsarms **(17)** zu definieren.

6. Vorrichtung nach Patentanspruch 5, **dadurch gekennzeichnet, dass** die jeweiligen Erstreckungsrichtungen **(X, X')** der besagten Halbarme **(23, 24)** so ausgerichtet sind, dass sie dazwischen einen vorbestimmten Neigungswinkel **(β)** bilden.

7. Vorrichtung nach Patentanspruch 6, **dadurch gekennzeichnet, dass** der besagte Neigungswinkel **(β)** zwischen 120° und 160° liegt.

8. Vorrichtung nach einem oder mehreren der Patentansprüche 2 bis 7, **dadurch gekennzeichnet, dass** sie ein Paar Verbindungsarme **(17)** umfasst.

9. Vorrichtung nach Patentanspruch 8, **dadurch gekennzeichnet, dass** die Verbindungsarme **(17)** des besagten Paares im Wesentlichen gleich zueinander sind.

10. Vorrichtung nach Patentanspruch 8 oder 9, **dadurch gekennzeichnet, dass** die besagten Abstreifmittel **(16)** in der Nähe der jeweiligen Enden **(18)** jedes Verbindungsarms **(17)** des besagten Paares, die dem Filterband **(3)** zugewandt sind, verbunden sind, wobei das besagte eine Gegengewicht oder die besagten mehreren Gegengewichte **(29)** in der Nähe der jeweiligen Enden **(19)** jedes Verbindungsarms **(17)** des besagten Paares verankert ist/sind, die sich auf der gegenüberliegenden Seite in Bezug auf das Ende **(18),** das dem besagten Filterband zugewandt ist, befinden.

11. Vorrichtung nach einem oder mehreren der vorhergehenden Patentansprüche, **dadurch gekennzeichnet, dass** jedes Gegengewicht **(29)** durch eine Vielzahl von Metallplatten **(30)** gebildet ist, die einander überlagert und durch Verbindungsmittel miteinander verbunden sind, um ein Plattenpaket mit einem vorbestimmten Gewicht zu definieren.

12. Vorrichtung nach Patentanspruch 11, **dadurch gekennzeichnet, dass** das Gewicht jedes Gegengewichts **(29)** in Abhängigkeit von der Anzahl von Metallplatten **(30),** aus denen das besagte Paket besteht, variiert.

13. Vorrichtung nach Patentanspruch 11 oder 12, **dadurch gekennzeichnet, dass** die besagten Verbindungsmittel ein Loch oder mehrere Löcher umfassen, das/die in jeder der besagten Metallplatten **(30)** in einer vorbestimmten Position ausgebildet ist/sind, wobei die besagten Löcher miteinander ausgerichtet sind, wenn die besagten Platten einander überlagert sind, so dass sie jeweilige Durchgänge definieren, die sich zwischen den Außenflächen **(31, 32)** der Endplatten **(33, 34)** erstrecken, die das Paket begrenzen.

14. Vorrichtung nach Patentanspruch 13, **dadurch gekennzeichnet, dass** die besagten Verbindungsmittel jeweils Folgendes umfassen: eine Vielzahl von Bolzen **(35),** die dazu geeignet sind, in die besagten Durchgänge eingeführt zu werden, und eine Vielzahl von Sicherungsmuttern **(36),** die dazu geeignet sind, so in die besagten Bolzen **(35)** geschraubt zu werden, dass sie die besagten Metallplatten **(30)** verdichten und ein entsprechendes Paket mit einem vorbestimmten Gewicht bilden.

## Revendications

1. Dispositif de filtration d'un liquide dans lequel des matières solides sont dispersées, comprenant :
- un cadre de support **(2)** s'étendant le long d'une direction d'extension longitudinale (L) ;
- une bande filtrante continue **(3)** fixée audit cadre de support **(2)** et partiellement insérée dans le liquide pour en favoriser la filtration et la séparation des matières solides qui y sont dispersées ;
- des moyens de manutention **(10)** aptes à favoriser le déplacement contrôlé de ladite bande filtrante **(3)** le long d'une direction de déplacement sensiblement parallèle à ladite direction d'extension longitudinale **(L)** dudit cadre **(2)** ;
- des moyens de raclage **(16)** aptes à favoriser l'enlèvement des matières solides déposées sur la surface extérieure **(15)** de ladite bande filtrante **(3)** à la suite de son contact avec le liquide à filtrer ;
- au moins un bras de connexion **(17)** apte à supporter lesdits moyens de raclage **(16),** ledit bras de connexion **(17)** étant articulé sur ledit cadre **(2)** en un point d'articulation **(P)** placé au-dessus de ladite bande filtrante **(3)** ;
- des moyens de précharge **(28)** associés audit au moins un bras de connexion **(17)** et aptes à contrebalancer au moins partiellement la force de poids agissant sur lesdits moyens de raclage **(16),** de manière à régler la précharge de ces derniers par rapport à la surface extérieure **(15)** de ladite bande filtrante **(3)** ;
**caractérisé en ce que** lesdits moyens de précharge **(28)** comprennent un ou plusieurs contrepoids **(29)** ;
et **en ce que** lesdits moyens de raclage **(16)** et le contrepoids **(29)** sont disposés du côté opposé par rapport à l'extension de ladite bande filtrante **(3),** lesdits éléments étant disposés du côté opposé par rapport à un plan médian longitudinal (**π**) passant par les centres **(R')** des sections courbes du parcours fermé **(C);**
et **en ce que** la hauteur dudit contrepoids **(29)** au-dessus du sol dépasse la hauteur desdits moyens de raclage **(16)** au-dessus du sol.

2. Dispositif selon la revendication 1, **caractérisé en ce que** chaque bras de connexion **(17)** a une paire d'extrémités **(18, 19)** et que ledit point d'articulation **(P)** est situé entre lesdites extrémités **(18, 19).**

3. Dispositif selon la revendication 2, **caractérisé en ce que** lesdits moyens de raclage **(16)** sont fixés à proximité de l'extrémité **(18)** dudit au moins un bras de connexion **(17)** orienté vers ladite bande filtrante **(3).**

4. Dispositif selon la revendication 2 ou 3, **caractérisé en ce que** lesdits un ou plusieurs contrepoids **(29)** est/sont fixé(s) audit bras de connexion **(17)** à proximité de l'extrémité **(19)** qui se trouve du côté opposé à l'extrémité **(18)** orientée vers ladite bande filtrante **(3).**

5. Dispositif selon l'une ou plusieurs des revendications 2 à 4, **caractérisé en ce que** chaque bras de connexion **(17)** est constitué de deux demi-bras **(23, 24)** sensiblement rectilignes reliés à une extrémité respective **(25, 26),** lesdits demi-bras ayant également des extrémités libres correspondantes aptes à définir respectivement les extrémités **(18, 19) du** bras de connexion **(17).**

6. Dispositif selon la revendication 5, **caractérisé en ce que** les directions d'extension respectives **(X, X')** desdits demi-bras **(23, 24)** sont orientées de manière à former entre elles un angle d'inclinaison prédéterminé (**β**).

7. Dispositif selon la revendication 6, **caractérisé en ce que** ledit angle d'inclinaison (**β**) est compris entre 120° et 160°.

8. Dispositif selon l'une ou plusieurs des revendications 2 à 7, **caractérisé en ce qu'**il comprend une paire de bras de connexion **(17).**

9. Dispositif selon la revendication 8, **caractérisé en ce que** les bras de connexion **(17)** de ladite paire sont sensiblement égaux entre eux.

10. Dispositif selon la revendication 8 ou 9, **caractérisé en ce que** lesdits moyens de raclage **(16)** sont reliés à proximité des extrémités respectives **(18)** de chaque bras de connexion **(17)** de ladite paire qui sont tournées vers la bande filtrante **(3),** lesdits un ou plusieurs contrepoids **(29)** étant fixés à proximité des extrémités respectives **(19)** de chaque bras de connexion **(17)** de ladite paire qui sont du côté opposé par rapport à l'extrémité **(18)** orientée vers ladite bande filtrante.

11. Dispositif selon l'une ou plusieurs des revendications précédentes, **caractérisé en ce que** chaque contrepoids **(29)** est formé par une pluralité de plaques métalliques **(30)** superposées les unes aux autres et reliées mutuellement par des moyens de connexion pour définir un paquet de plaques ayant un poids prédéterminé.

12. Dispositif selon la revendication 11, **caractérisé en ce que** le poids de chaque contrepoids **(29)** varie en fonction du nombre de plaques métalliques **(30)** constituant ledit paquet.

13. Dispositif selon la revendication 11 ou 12, **caractérisé en ce que** lesdits moyens de connexion comprennent un ou plusieurs trous pratiqués dans chacune desdites plaques métalliques **(30)** dans une position prédéterminée, lesdits trous étant alignés entre eux lorsque lesdites plaques sont superposées, de manière à définir des passages traversants respectifs s'étendant entre les surfaces extérieures **(31, 32)** des plaques d'extrémité **(33, 34)** délimitant le paquet.

14. Dispositif selon la revendication 13, **caractérisé en ce que** lesdits moyens de connexion comprennent respectivement une pluralité de boulons **(35)** aptes à être insérés dans lesdits passages et une pluralité d'écrous de blocage **(36)** aptes à être vissés dans lesdits boulons **(35)** de manière à compacter lesdites plaques métalliques **(30)** et à former un paquet correspondant ayant un poids prédéterminé.
